Europäisches Patentamt

European Patent Office

Office européen des brevets

(19)

(11) Publication number: **0 023 845**
**B1**

(12) **EUROPEAN PATENT SPECIFICATION**

(45) Date of publication of patent specification: 30.03.83

(51) Int. Cl.³: **G 11 B 19/24**

(21) Application number: **80302695.4**

(22) Date of filing: **06.08.80**

(54) **Apparatus for recording a signal at constant relative tracing linear speed on a rotating recording medium.**

(30) Priority: **06.08.79 JP 100446/79**

(43) Date of publication of application:
**11.02.81 Bulletin 81/6**

(45) Publication of the grant of the patent:
**30.03.83 Bulletin 83/13**

(84) Designated Contracting States:
**DE FR GB NL**

(56) References cited:
**EP - A - 0 011 493**
**EP - A - 0 011 494**
**EP - A - 0 011 495**
**EP - A - 0 013 903**
**DE - A - 2 257 817**
**US - A - 4 142 210**

(73) Proprietor: **VICTOR COMPANY OF JAPAN, LIMITED**
**3-12, Moriya-cho**
**Kanagawa-ku Yokohama (JP)**

(72) Inventor: **Shikunami,Juichi**
**No.4-6-3, Higashi Ohnuma**
**Sagamihara-City Kanagawa-Ken (JP)**

(74) Representative: **Robinson, John Stuart et al,**
**Marks & Clerk 57/60 Lincoln's Inn Fields**
**London WC2A 3LS (GB)**

# Apparatus for recording a signal at constant relative tracing linear speed on a rotating recording medium

The present invention relates generally to apparatuses for recording signals on rotating recording mediums with constant relative tracing linear speed. More particularly, the invention relates to an apparatus in which a recording element records a signal on a rotating recording medium as the rotation of the motor for driving the recording medium is so controlled that the relative tracing linear speed between the recording medium and the recording element is maintained constant irrespective of the position of the recording element on the rotating recording medium.

In one system for recording and reproducing signals on and from a rotating recording medium which has been widely used, a rotating medium of disc shape (hereinafter referred to as a disc) is rotated at a constant rotational speed, and a signal is recorded on or reproduced from the disc respectively by means of a recording element or a reproducing element. In this system, the relative tracing linear speed (hereinafter referred to as the tracing speed) between the reproducing element and the disc decreases, and the S/N ratio of the reproduced signal decreases, at the inner part of the disc. Accordingly, in this known system, the rotational speed of the disc is so determined that the signal reproduced from the innermost recorded part of the disc will have at least a specific S/N ratio.

Since the rotational speed of the disc is constant in this known system, the tracing speed between the reproducing element and the disc at the outer part of the disc becomes higher than is necessary. Consequently, a disadvantage of this system has been that the recording capacity (recording/reproducing time) of the disc is relatively small.

Accordingly, a system wherein the rotational speed of the disc is varied interrelatedly with the traversing movement of the reproducing element in the radial direction of the disc so that the tracing speed between the reproducing element and the disc will always be constant irrespective of the part of the disc being reproduced has been proposed. In the recording system of this system, also, recording is carried out, of course, as the rotation of the disc is so controlled that the tracing speed between the recording element and the disc will be constant.

In this system, the rotation control system is complicated because of the need to continually vary and control the rotational speed of the disc, but, on the other hand, there is afforded the advantageous possibility of a relatively large recording capacity of the disc resulting from the selection of the disc rotational speed at a value of an order for obtaining a desired S/N ratio, whereby the disc rotational speed need not be made unnecessarily high, since the above mentioned tracing speed is constant.

In one proposed recording apparatus employing the above described constant tracing speed system, there is provided a variable resistor of the straight-line sliding type having a slider contact which is displaced interrelatedly with the traversing movement of the recording element in the radial direction of the disc. In a recording apparatus of this character, the rotational speeds of the motor for driving the turntable and the motor for driving the mechanism for feeding the recording element in traversing movement are controlled in response to an analog voltage obtained from the slider contact of the variable resistor.

However, in general, the accuracy of an analog rotation control is poor. Furthermore, in a variable resistor, there is an error up to a maximum of the order of 2 percent due to errors such as linearity error and temperature stability error. This error appears cumulatively and expandingly at the innermost part of the recorded region of the disc. For example, a speed error of 2 percent at a position 100 mm from the center of the disc corresponds to a recording time error of 4 percent at a position 50 mm from the center. Therefore, it has been very difficult to reduce to practice a recording apparatus capable of recording signals in an excellent manner with a constant tracing speed through the use of a variable resistor of great error in this manner.

DE—A—2 257 817 discloses another recording apparatus employing the above described constant tracing speed system, in which there is provided oscillation means for producing a signal of constant frequency and means for detecting the rotation of a motor for rotating a recording medium. Means are also provided for comparing the phases of the output signal of the oscillation means and the output detection signal of the detecting means, and for controlling rotation of the motor so that the relative tracing linear speed between the recording medium and a recording element is maintained constant irrespective of the relative positions of the recording medium and the recording element.

Attention is also directed to EP—A—0 011 495, EP—A—0 013 903, EP—A—0 011 493, and EP—A—0 011 494.

Accordingly, it is a general object of the present invention to provide a novel and useful apparatus for recording a signal on a rotating recording medium at a constant tracing speed, in which apparatus the above described problems have been overcome.

Another and specific object of the invention is to provide a recording apparatus as defined in the claims in which the rotations of the motor for driving in rotation the rotating recording medium and of a driving motor for moving in relative feeding movement either of the rotating recording medium and the recording element relative to the other are digitally controlled so that the tracing speed between the recording medium and the recording element will become constant.

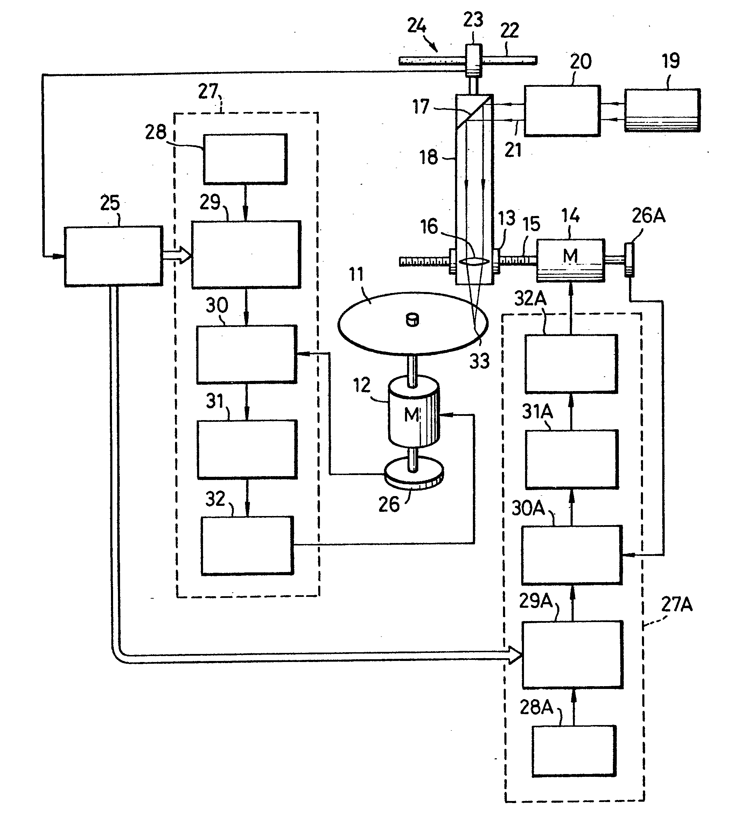

Other objects and further features of the invention will be apparent from the following detailed description with respect to a preferred embodiment of the invention when read in conjunction with the accompanying drawing, in which:—

The single figure is a general block system diagram of the embodiment of the recording apparatus according to the present invention.

Referring to this figure, a rotating recording medium (disc) 11 on which a signal is to be recorded is driven in rotation by a motor 12. A carriage 13 is meshed in screw engagement with a horizontal feed screw 15 driven in rotation by another motor 14 and is thereby driven in accordance with the rotation of the feed screw 15 in traverse movement in the left and right directions as viewed in the figure. A recording unit 18 having an objective lens 16 and a reflecting mirror 17 is fixedly mounted on the carriage 13. A laser light source 19 and a light modulator 20 are so accurately positioned in respect of their optical axes and adapted that, irrespective of the position of the recording unit 18 during its movement, a laser light beam 21 emitted therefrom is reflected by the reflecting mirror 17 and, passing through the objective lens 16, is focused on the disc 11.

The laser beam emitted from the laser light source 19 is modulated in the light modulator 20 in response, for example, to a video signal to be recorded.

As the recording unit 18 traverses in the radial direction of the disc 11 in concern with the rotation of the feed screw 15, the signal to be recorded is recorded along a spiral track on the rotating disc 11 by a recording beam spot 33 formed by the focusing of the laser beam by the objective lens 16.

A pickup ring 23, which constitutes a magnetic encoder (linear encoder) 24 together with a magnet bar 22 is provided to move unitarily with the recording unit 18. The magnet bar 22 has $N$ and $S$ poles that are finely and alternately magnetized. As the pickup ring 23, through which the magnet bar 22 is passed, moves together with the recording unit 18, a pulse is led out every 1 $\mu$m, for example, of its movement and is supplied to a digital counter 25.

Rotary encoders 26 and 26A are provided on the rotor shafts of the motors 12 and 14, respectively. Each of these rotary encoders 26 and 26A may be of known composition comprising, for example, a disc having numerous thin slits mounted on the rotor shaft of its respective motor 12 or 14 and a light-emitting element and a light-receiving element disposed on mutually opposite sides of the disc.

The linear encoder 24 and the rotary encoders 26 and 26A are not limited to their compositions described above but may be of other compositions.

For the disc motor 12, a rotation control circuit 27 described hereinbelow is provided, while, for the feed motor 14, a rotation control circuit 27A is provided. Since the circuit composition of the rotation control circuit 27A is exactly the same as that of the rotation control circuit 27, the corresponding blocks in these circuits 27A and 27 are respectively designated by the same reference numerals, those in the circuit 27A being additionally designated by the subscript $A$, and these blocks will be described with respect to only the circuit 27.

The rotation control circuit 27 has a crystal oscillator 28 which generates a signal of a constant frequency of, for example, 4.924 KHz. This oscillation frequency signal is supplied as a signal to be frequency divided to a digital variable frequency divider 29. For this digital variable frequency divider 29, a programmable divider comprising, for example, a combination of a plurality of programmable counters (such as, for example, those of type MC 14522 manufractured by the Motorola Company) in the required number of digit positions, is used.

A value indicative of the outermost peripheral position of the disc 11 is preset, for example, by manipulating a presetting button, in the aforementioned digital counter 25. As a result of the rotation of the feed motor 14 and of the feed screw 15 driven thereby, the carriage 13 and the recording unit 18 mounted thereon are moved leftward as viewed in the figure, and the recording beam spot 33 focused by the objective lens 16 on the disc 11 moves from the outermost peripheral position of the disc toward the inner part thereof in the radial direction and, exposing the surface of the disc to light, records the video signal.

Together with this traversing movement of the recording unit 18, pulses are led out from the linear encoder 24 and supplied to the digital counter 25. The digital counter 25 counts the pulses thus fed thereto and proceeds to subtract preset values, supplying the resulting values of this subtraction to the digital variable frequency dividers 29 and 29A.

The values of the signals from the digital counter 25 correspond respectively with the positions in the radial direction of the disc 11 of the recording beam spot 33 formed by the recording unit 18.

The frequency dividing ratio of the digital variable frequency divider 29 with respect to the frequency of the signal from the oscillator 28 is varied responsively in accordance with the value of the signal from the digital counter 25. This frequecy dividing ratio of the digital variable frequency divider 29 is thus varied between, for example, 1/217,200 and 1/85,000 as the light beam spot 33 traverses between the outermost peripheral position and the innermost position of the recorded part of the disc 11.

The frequency signal divided by the digital variable frequency divider 29 is supplied to a phase comparator 30. A signal responsive to the rotation of the disc motor 12 from the encoder 26 is also supplied to the phase comparator 30. The output error signal of this phase comparator 30 is supplied by way of a loop filter 31 to a direct-current (DC) amplifier 32. The disc motor 12 is driven by the output signal of this DC amplifier 32. The loop formed by and including the phase comparator 30, the loop filter 31, the DC amplifier 32, the motor 12, and the encoder 26 constitutes a phase-locked loop (PLL). Accordingly, the disc motor 12 is rotated in a state wherein it is phase locked to the frequency-divided output of the digital variable frequency divider 29. Therefore, the disc 11 is rotated at a rotational speed which is responsively according to the output frequency of the digital variable frequency divider 29.

As described above, the frequency dividing ratio of the digital variable frequency divider 29 is varied in accordance with the position of the light beam spot 33 on the disc 11. For this reason, as the light beam spot 33 traverses from the outer periphery toward the inner part of the disc 11, the rotational speed of the disc 11 is so increased that the relative tracing linear speed (i.e., the tracing speed) between the light beam spot 33 and the disc 11 will be constant. The rotational speed of the disc 11 is, for example, 639 rpm. when the light beam spot 33 is at the outermost recorded part of the disc 11 and is 1,632 rpm. when the spot 33 is at the innermost recorded part of the disc.

In this connection, as the light beam spot 33 traverses from the outer periphery toward the inner part of the disc 11, that is, as the distance in the radial direction of the light beam spot from the disc rotational center decreases, the time required for one revolution of the disc decreases linearly therewith. In the case of the above given numerical example, the tracing speed between the light beam spot 33 and the disc 11 is, for example, 7.26 meters/sec., irrespective of the position of the light beam spot 33 on the disc.

The rotation of the feed motor 14 also is controlled by the rotation control circuit 27A of the same circuit composition as the rotation control circuit 27 in response to a signal indicating the position of the light beam spot 33 supplied from the digital counter 25. Accordingly, the feeding speed of the recording unit 18 is so controlled that it is slow at the outer periphery of the disc 11 and becomes progressively faster as the recording unit 18 is fed toward the inner part of the disc, becoming a maximum at the innermost recorded part of the disc. Thus, the feed of the recording unit 18 is so controlled that the tracing speed of the light beam spot 33 relative to the disc 11 will be constant and is so controlled that the recording track pitch will be constant even when the rotation of the disc is varied.

While, in the above described embodiment of the invention for feeding the light beam spot 33 in the radial direction of the disc 11, an arrangement wherein the recording unit 18 is driven and fed by the feed motor 14, the feeding arrangement need not be so limited. For example, an arrangement wherein the recording unit 18 is fixed, while the disc 11 and the disc motor 12 are provided on a feeding stage which is driven by the feed motor 14 to be so fed that the light beam spot 33 moves relatively to the disc 11 in the radial direction thereof may be used. In this case, the linear encoder 24 is mounted on the feeding stage.

Furthermore, the traversing movement of the light beam spot 33 is not limited to that from the outer periphery to the inner part of the disc 11 but may be in the reverse direction of from the innermost recorded part to the outer periphery of the disc. In this case, a digital counter 25 of addition type is used, and the rotation of the disc motor 12 is so controlled that the rotational speed of the disc 11 decreases as the light beam spot 33 moves from the inner part toward the outer periphery of the disc.

In a reproducing apparatus for reproducing a recording disc obtained from the disc 11 recorded in the above described manner, reproduction is carried out with a tracing speed between the reproducing element and the disc which is maintained constant by synchronizing the rotations of the disc motor and the feed motor with a synchronizing signal in the signal reproduced from the recording disc.

## Claims

1. A recording apparatus comprising a first motor (12) for driving in rotation a rotating recording medium (11), a recording element (33) for recording a signal on said rotating recording medium (11), a first oscillation means (28) for producing a signal of constant frequency, a first detecting means (26) for detecting the rotation of said first motor (12), and a first controlling means (30, 31, 32) for comparing the phases of a reference signal and the output detection signal of said first detecting means (26) controlling the rotation of said first motor (12) in response to the resulting comparison output, whereby the rotation of said first motor (12) is so controlled that the relative tracing linear speed between said rotating recording medium (11) and said recording element (33) is maintained constant irrespective of the relative position of said recording element (33) with respect to said rotating recording medium (11), characterized in that there are provided means (24, 25) for generating a digital signal responsively according to the position of said recording element (33) relative to said rotating recording medium (11), and a first digital variable frequency dividing means (29) operating with a frequency dividing ratio varied in response to said digital signal from said digital signal generating means (24, 25) to divide the frequency of the output signal of said first oscillation means (28), said reference signal being the output signal of said first digital variable frequency dividing means (29).

2. A recording apparatus as claimed in claim 1 which further comprises a second motor (14) for driving and transferring either one of said rotating recording medium (11) and recording element (33) so that the recording element (33) is relatively transferred in the radial direction of the rotating recording medium (11) thereon, characterized in that there are further provided a second oscillation means (28A) for producing a signal of constant frequency, a second digital variable frequency dividing means (29A) operating with a frequency dividing ratio varied in response to said digital signal from said digital signal generating means (24, 25) to divide the frequency of the output signal of said second oscillation means (28A), a second detecting means (26A) for detecting the rotation of said second motor (14), and a second controlling means (30A, 31A, 32A) for comparing the phases of the output signal of said second digital variable frequency dividing means (29A) and the output detection signal of said second detecting means (26A) and, in response to the resulting comparison output, controlling the rotation of said second motor (14), whereby the rotation of said second motor (14) is so controlled that the track pitch between adjacent tracks recorded by the recording element (33) on the rotating recording medium (11) is caused to be constant.

3. A recording apparatus as claimed in claim 1, characterized in that said digital signal generating means comprises means (24) for generating a pulse signal in responsive accordance with said relative position of said recording element (33) with respect to said rotating recording medium (11) and a digital counter (25) for counting the pulses of the pulse signal thus generated and producing as output said digital signal of a value responsively in accordance with said relative position of said recording element (33).

4. A recording apparatus as claimed in claim 3, characterized in that said recording element (33) is fed relatively to said rotating recording medium (11) in the radial direction thereof from the outer periphery toward the inner part thereof, and said digital counter (25) is preset at a value corresponding to the outer peripheral position of said recording element (33) with respect to said rotating recording medium (11), and carries out subtraction in responsive accordance with the count of said pulse signals in accompaniment with said relative feeding of said recording element (33), producing as output a signal of a value corresponding to the result of said subtraction.

5. A recording apparatus as claimed in claim 3, characterized in that said recording element (33) is fed relatively to said rotating recording medium (11) in the radial direction thereof from the innermost recorded part toward the outer periphery thereof, and said digital counter (25), in accompaniment with said relative feeding of said recording element (33), carries out addition of the pulses of said pulse signal and produces as output a signal of a value corresponding to the result of said addition.

6. A recording apparatus as claimed in claim 1, characterized in that said first control means is a phase-locked loop comprising a phase comparator (30) for comparing the phases of the output signal of said first digital variable frequency dividing means (29) and of the output detection signal of said first detecting means (26), a loop filter (31) supplied with the output of said phase comparator, and direct-current amplifier (32) for amplifying the output of said loop filter to produce an amplified output which is applied to said first motor (12).

**Patentansprüche**

1. Ein Aufzeichnungsgerät mit einem ersten Motor (12) zum Antreiben eines sich drehenden Aufzeichnungsmediums (11) zu einer Drehbewegung, mit einem Aufzeichnungselement (33) zum Aufzeichnen eines Signals auf dem sich drehenden Aufzeichnungsmedium (11), mit ersten Oszillatoreinrichtungen (28) zum Erzeugen eines Signals konstanter Frequenz, mit ersten Detektoreinrichtungen (26) zum Erfassen der Drehung des ersten Motors (12) und mit ersten Regeleinrichtungen (30, 31, 32) zum Vergleichen der Phasen eines Referenzsignals und des Detektorausgangssignals der ersten Detektoreinrichtungen (26) und zum Regeln der Drehung des ersten Motors (12) in Abhängigkeit von dem resultierenden Vergleichs-Ausgangssignal derart, daß die Drehung bzw. Drehzahl dieses Motors (12) so geregelt wird, daß die relative Lineargeschwindigkeit beim Aufzeichnen zwischen dem sich drehenden Aufzeichnungsmedium (11) und dem Aufzeichnungselement (33) unabhängig von der relativen Lage des Aufzeichnungselements (33) bezüglich des sich drehenden Aufzeichnungsmediums (11) konstant gehalten wird, dadurch gekennzeichnet, daß Einrichtungen (24, 25) vorgesehen sind, um ein Digitalsignal in Abhängigkeit von der Position des Aufzeichnungselements (33) bezüglich des sich drehenden Aufzeichnungsmediums (11) zu erzeugen, und daß erste digitale, mit variabler Frequenz arbeitende Teilereinrichtungen (29) vorgesehen sind, welche mit einem Frequenzteilerverhältnis arbeiten, das in Abhängigkeit von dem Digitalsignal von den Digitalsignal-Erzeugungseinrichtungen (24, 25) verändert wird, um die Frequenz des Ausgangssignals der ersten Oszillatoreinrichtungen (28) zu teilen, wobei das Referenzsignal das Ausgangssignal der ersten digitalen, mit variabler Frequenz arbeitenden Teilereinrichtungen (29) ist.

2. Ein Aufzeichnungsgerät, wie es in Anspruch 1 beansprucht ist, welches außerdem einen zweiten Motor (14) aufweist, um entweder das sich drehende Aufzeichnungsmedium (11) oder das Aufzeichnungselement anzutreiben und zu verschieben, so daß das Aufzeichnungselement (33) relativ zu dem sich drehenden Aufzeichnungsmedium (11) in radialer Richtung desselben verschoben wird, dadurch gekennzeichnet, daß außerdem zweite Oszillatoreinrichtungen (28A) vorgesehen sind, um ein Signal konstanter Frequenz zu erzeugen, daß zweite, digitale, mit variabler Frequenz arbeitende Teilereinrichtungen (29A) vorgesehen sind, welche mit einem Frequenzteilerverhältnis arbeiten, das in Abhängigkeit von dem Digitalsignal von den Digitalsignal-Erzeugungseinrichtungen (24, 25) verändert wird, um die Frequenz des Ausgangssignals der zweiten Oszillatoreinrichtungen (28A) zu ändern, daß zweite Detektoreinrichtungen (26A) vorgesehen sind, um die Drehung des zweiten Motors (14) zu erfassen, und daß zweite Regeleinrichtungen (30A), 31A, 32A) vorgesehen sind, um die Phasen des Ausgangssignal der zweiten, digitalen, mit variabler Frequenz arbeitenden Teilereinrichtungen (29A) und das Detektorausgangssignal der zweiten Detektoreinrichtungen (26A) miteinander zu vergleichen und um die Drehung bzw. Drehzahl des zweiten Motors (14) in Abhängigkeit von dem resultierenden Vergleichs-Ausgangssignal derart zu regeln, daß die Drehung des zweiten Motors (14) so geregelt wird, daß der Spurabstand zwischen benachbarten Spuren, die von dem Aufzeichnungselement (33) auf dem sich drehenden Aufzeichnungsmedium (11) aufgezeichnet werden, veranlaßt wird, konstant zu sein.

3. Ein Aufzeichnungsgerät, wie es in Anspruch 1 beansprucht ist, dadurch gekennzeichnet, daß die Digitalsignal-Erzeugungseinrichtungen Einrichtungen (24) zum Erzeugen eines Impulssignals in Abhängigkeit von der relativen Position des Aufzeichnungselements (33) bezüglich des sich drehenden Aufzeichnungsmediums (11) umfassen sowie einen Digitalzähler (25) zum Zählen der Impulse des Impulssignals, welches auf diese Weise erzeugt wird, und zum Erzeugen des Digitalsignals mit einem dieser relativen Position des Aufzeichnungselementes (33) entsprechenden Wert als Ausgangsignal.

4. Ein Aufzeichnungsgerät, wie es in Anspruch 3 beansprucht ist, dadurch gekennzeichnet, daß das Aufzeichnungselement (33) bezüglich des sich drehenden Aufzeichnungsmediums (11) in radialer Richtung desselben vom äußeren Umfang in Richtung auf den inneren Teil desselben geführt wird und daß der Digitalzähler (25) auf einen Wert voreingestellt wird, der der Position des Aufzeichnungselementes (33) bezüglich des äußeren Umfangs des sich drehenden Aufzeichnungsmediums (11) entspricht und in Abhängigkeit von der Zählung der Impulssignale, von welchen die relative Nachführung des Aufzeichnungselementes (33) begleitet ist, eine Subtraktion ausführt und als Ausgangsignal ein Signal mit einem Wert erzeugt, welcher dem Ergebnis dieser Subtraktion entspricht.

5. Ein Aufzeichnungsgerät, wie es in Anspruch 3 beansprucht ist, dadurch gekennzeichnet, daß das Aufzeichnungselement (33) bezüglich des sich drehenden Aufzeichnungsmediums in radialer Richtung desselben von dem innersten aufgezeichneten Teil zu dem äußeren Umfang desselben geführt wird und daß der Digitalzähler (25) in Übereinstimmung mit der relativen Nachführung des Aufzeichnungselements (33) eine Addition der Impulse des Impulssignals ausführt und als Ausgangssignal ein Signal mit einem Wert erzeugt, der dem Ergebnis dieser Addition entspricht.

6. Ein Aufzeichnungsgerät, wie es in Anspruch 1 beansprucht ist, dadurch gekennzeichnet, daß die ersten Regeleinrichtungen eine phasenstarre Schleife bilden, welche einen Phasenkomparator (30) zum Vergleichen der Phasen des Ausgangssignals der ersten, digitalen, mit variabler Frequenz arbeitenden Teilereinrichtungen (29) und des Detektorausgangssignals der ersten Detektoreinrichtungen (26), ein Schleifenfilter (31), welches mit dem Ausgangssignal des Phasenkomparators gespeist wird und einen Gleichstromverstärker (32) umfaßt, um das Ausgangssignal des Schleifenfilters zu verstärken und ein verstärktes Ausgangssignal zu erzeugen, welches an den ersten Motor (12) angelegt wird.

**Revendications**

1. Appareil enregistreur comprenant un premier moteur (12) pour entraîner à rotation un support d'enregistrement tournant (11), une tête d'enregistrement (33) pour enregistrer un signal sur ledit support d'enregistrement tournant (11), des premiers moyens d'oscillation (28) pour produire un signal à fréqence constante, des premiers moyens de détection (26) pour détecter la rotation dudit premier moteur (12) et des premiers moyens de commande (30, 31, 32) pour comparer les phases d'un signal de référence et le signal de détection sortant desdits premiers moyens de détection (26) et pour comander la rotation dudit premier moteur (12) en réponse à la sortie résultante de la comparaison pour que la rotation dudit premier moteur (12) soit commandée de sorte que la vitesse de traçage linéaire relative entre ledit support d'enregistrement tournant (11) et ladite tête d'enregistrement (33) demeure constante indépendamment de la position relative de ladite tête d'enregistrement (33) par rapport au support d'enregistrement tournant (11), caractérisé en ce que sont prévus des moyens (24, 25) pour générer un signal numérique en dépendance de la position de ladite tête d'enregistrement (33) relativement audit support d'enregistrement tournant (11), et des premiers moyens numériques de division à fréquence variable (29) pour diviser la fréquence du signal sortant desdits premiers moyens d'oscillation (28) dans un rapport de division de fréquence fonction dudit signal numérique desdits moyens de génération de signal numérique (24, 25), ledit signal de référence étant le signal de sortie desdits premiers moyens numériques de division à fréquence variable (29).

2. Appareil enregistreur conforme à la revendication 1 qui comprend, en outre, un second moteur (14) pour entraîner et translater l'un ou l'autre desdits supports d'enregistrement tournant (11), et tête d'enregistrement afin que la tête d'enregistrement (33) soit translatée suivant la direction radiale du support d'enregistrement tournant (11), caractérisé en ce que sont prévus, en outre, des seconds moyens d'oscillation (28A) pour produire un signal à fréquence constante, des seconds moyens numériques de division à fréquence variable (29A) pour diviser la fréquence du signal sortant desdits seconds moyens d'oscillation (28A) dans un rapport de division de fréquence fonction dudit signal numérique desdits moyens de génération de signal numérique (24, 25), des seconds moyens de détection (26A) pour détecter la rotation dudit second moteur (14), et des seconds moyens de commande (30A, 31A, 32A) pour comparer les phases du signal sortant desdits seconds moyens numériques de division à fréquence variable (29A) et le signal de détection sortant desdits seconds moyens de détection (26A) et pour commander la rotation dudit second moteur (14) en réponse à la sortie résultante de la comparaison pour que la rotation dudit second moteur (14) soit commandée de sorte que le pas entre les traces adjacentes enregistrées au moyen de la tête d'enregistrement (33) sur le support d'enregistrement tournant (11) soit constant.

3. Appareil enregistreur conforme à la revendication 1, caractérisé en ce que lesdits moyens de génération de signal numérique comprennent des moyens (24) pour générer un signal impulsif en réponse à la position relative de ladite tête d'enregistrement (33) par rapport audit support d'enregistrement tournant (11) et un compteur numérique (25) pour compter les impulsions du signal impulsif ainsi générées et pour produire en sortie ledit signal numérique ayant une valeur dépendante de la position relative de ladite tête d'enregistrement (33).

4. Appareil enregistreur conforme à la revendication 3, caractérisé en ce que ladite tête d'enregistrement (33) est déplaçable relativement au support d'enregistrement tournant (11) suivant la direction radiale de celui-ci, de la périphérie externe vers la partie interne de celui-ci, et ledit compteur numérique (25) est initialisé à une valeur correspondant à la position périphérique externe de ladite tête d'enregistrement (33) par rapport audit support d'enregistrement tournant (11) et effectue une soustraction relativement au compte des impulsions du signal impulsif en corrélation avec ledit déplacement relatif de ladite tête d'enregistrement (33) afin de produire en sortie un signal ayant une valeur correspondant au résultant de ladite soustraction.

5. Appareil enregistreur conforme à la revendication 3, caractérisé en ce que ladite tête d'enregistrement (33) est déplaçable relativement au support d'enregistrement tournant (11) suivant la direction radiale de celui-ci, de la plus interne partie enregistrée vers la périphérie extern de celui-ci, et ledit compteur numérique (25), an corrélation avec ledit déplacement relatif de la tête d'enregistrement (33), effectue une addition des impulsions dudit signal impulsif et produit en sortie un signal ayant une valeur correspondant au resultat de ladite addition.

6. Appareil enregistreur conforme à la revendication 1, caractérisé en ce que lesdits premiers moyens de commande consistent en une boucle à verrouillage de phase comprenant un comparateur de phase (30) pour comparer les phases du signal sortant desdits premiers moyens numériques de division à fréquence variable (29) et du signal de détection sortant desdits premiers moyens de détection (26), un filtre de boucle (31) relié à la sortie dudit comparateur de phase, et un amplificateur à courant continu (32) amplifiant la sortie dudit filtre de boucle pour produire un signal de sortie amplifié qui est appliqué audit premier moteur (12).